# EUROPÄISCHE PATENTANMELDUNG

(11) **EP 4 759 850 A1**
(43) Veröffentlichungstag der Anmeldung: **17.06.2026**
(21) Anmeldenummer: 25218559.0
(22) Anmeldetag: 26.11.2025
(51) Int. Cl.: C08G 18/10, C08G 18/38, C08G 18/48, C08G 18/50, C08G 18/66, C08G 18/78, C08G 18/79, C09D 175/08

(54) **ABDICHTUNG UNTER GUSSASPHALT**

(30) Priorität: 13.12.2024 DE 102024137610
(71) Anmelder: FRANKEN SYSTEMS GmbH, 97258 Gollhofen (DE)
(72) Erfinder: Luckert, Sven, 97320 Sulzfeld am Main (DE); Schobben, Christian, 48268 Greven (DE); Schmalstieg, Lutz, 97320 Sulzfeld am Main (DE); Schäfer, Julian, 97204 Höchberg (DE)
(74) Vertreter: Gleim Petri Patent- und Rechtsanwaltspartnerschaft mbB

(57) **Zusammenfassung**

Verfahren zur anteiligen oder vollflächigen Abdichtung von befahrbaren Verkehrsflächen aus Beton umfassend die folgenden Arbeitsschritte:
1. Untergrundbehandlung mit einer Grundierung auf Basis von aliphatischen Polyisocyanaten und Polyasparaginsäureester-Mischungen
2. Aufbringen einer flüssigen Abdichtungsschicht auf Basis von aliphatischen Polyisocyanaten und Polyasparaginsäureester-Mischungen
3. Aufbringen einer Haftschicht auf Basis von aliphatischen Polyisocyanaten und Polyasparaginsäureester-Mischungen
4. Einstreuen von Quarzsand in die Haftschicht
5. Aufbringen mindestens einer Gussasphalt-Verschleißschicht
dadurch gekennzeichnet, dass Polyasparaginsäureester-Mischungen eingesetzt werden, mindestens enthaltend
i) einen Polyasparaginsäureester der Struktur 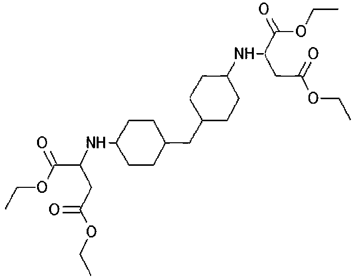 ii) mindestens einem weiteren aminofunktionellen Polyasparaginsäureester der allgemeinen Strukturformel 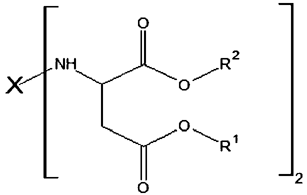 in der R1 und R2 unabhängig voneinander für eine Methylgruppe oder eine Ethylgruppe stehen und X für einen 2-wertigen organischen Rest steht, der durch Entfernung der Aminogruppen aus einem Aminopolyether der allgemeinen Strukturformel 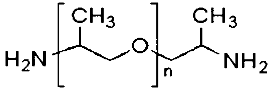 entsteht, worin auch entsprechende Konstitutionsisomere umfasst sind und n für eine Zahl von 2 bis 8, vorzugsweise 2,5 bis 6,5 und besonders bevorzugt 2,5 bis 4,5 steht.

## Beschreibung

Die vorliegende Erfindung betrifft ein verbessertes Verfahren zur Abdichtung von befahrbaren Verkehrsflächen aus Beton mit einer Verschleißschicht auf Gussasphalt-Basis unter Verwendung von Flüssigkunststoffen auf Basis von aliphatischen Polyisocyanaten und Polyasparaginsäureestern.

Verkehrsflächen aus Beton mit einer Nutzschicht auf Gussasphalt-Basis müssen zwangsläufig mit einer Dichtungsschicht abgedichtet werden, um das Eindringen schädlicher Stoffe, insbesondere Tausalz oder Kraftstoffe in den Beton zu verhindern. Entsprechende Aufbauten und geeignete Abdichtungen sind in weiten Bereichen normativ geregelt, beispielsweise im Rahmen der DIN 18532 Teil 1,2 und 6.

Typischerweise kann die Abdichtungsschicht mit Hilfe von Bitumen-Schweißbahnen erstellt werden oder mittels flüssig aufzubringender Abdichtungsmaterialien, auch Flüssigkunststoffe genannt. Die flüssig aufzubringenden Abdichtungsmaterialien können dabei vollflächig auf der Verkehrsfläche appliziert werden oder aber in Kombination mit Bitumen-Schweißbahnen angewendet werden, wobei nur Bauwerkdetails und Anschlussbereiche mit den Flüssigkunststoffen abgedichtet werden. Hierbei haben sich Materialien auf Polyurethan-, Polyurea- und Urethanacrylat-Basis in besonderem Maße bewährt.

In der WO2013185156A1 wird ein rationelles Verfahren zur Abdichtung von Fahrbahnen beschrieben, welches den aktuellen Stand der Technik widerspiegelt: hierbei wird der Beton-Untergrund zunächst grundiert, anschließend wird mit Sand abgestreut. Danach wird eine Polyurea-Spritzbeschichtung als Abdichtung aufgebracht. Zur Vermittlung einer ausreichenden Haftung zur Gussasphalt Deckschicht muss ein Haftprimer aufgebracht werden, der mit Kunststoffgranulat abgestreut wird und mit einer Bitumen- oder Bitumen-Latex-Emulsion versehen wird. Diese Ausführungen zeigen, dass es schwierig und aufwändig ist, eine ausreichende Haftung zwischen Polyurethan- und/oder Polyurea-Abdichtungen und der Gussasphalt-Verschleißschicht zu erzielen.

In jüngerer Zeit gibt es verstärkte Bestrebungen und Auflagen, gesundheitsschädliche Emissionen bei der Verlegung von Gussasphalt zu minimieren. Dies gelingt durch Erniedrigung der Temperaturen bei der Verlegung von weniger als 200°C, vorzugsweise weniger als 190°C, was aber mit einer Verschlechterung der Haftung zwischen Abdichtungsschicht und Gussasphalt einhergeht.

Aufgabe der vorliegenden Erfindung war daher die Bereitstellung eines verbesserten Verfahrens zur Abdichtung von befahrbaren Verkehrsflächen aus Beton mit einer Verschleißschicht auf Gussasphalt-Basis. Diese Aufgabe konnte durch Bereitstellung des nachstehend näher beschriebenen Verfahrens gelöst werden.

Gegenstand der Erfindung ist ein Verfahren zur anteiligen oder vollflächigen Abdichtung von befahrbaren Verkehrsflächen aus Beton umfassend die folgenden Arbeitsschritte:
1. Untergrundbehandlung mit einer Grundierung auf Basis von aliphatischen Polyisocyanaten und Polyasparaginsäureester-Mischungen
2. Aufbringen einer flüssigen Abdichtungsschicht auf Basis von aliphatischen Polyisocyanaten und Polyasparaginsäureester-Mischungen
3. Aufbringen einer Haftschicht auf Basis von aliphatischen Polyisocyanaten und Polyasparaginsäureester-Mischungen
4. Einstreuen von Quarzsand in die Haftschicht
5. Aufbringen mindestens einer Gussasphalt-Verschleißschicht
dadurch gekennzeichnet, dass Polyasparaginsäureester-Mischungen eingesetzt werden, mindestens enthaltend
i) einem Polyasparaginsäureester der Struktur 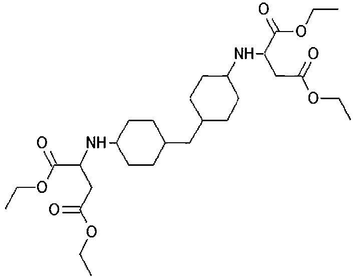
ii) mindestens einem weiteren aminofunktionellen Polyasparaginsäureester der allgemeinen Strukturformel 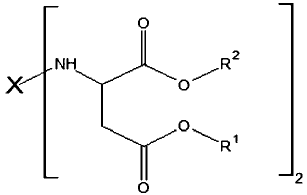 in der R1 und R2 unabhängig voneinander für eine Methylgruppe oder eine Ethylgruppe stehen und X für einen 2-wertigen organischen Rest steht, der durch Entfernung der Aminogruppen aus einem Aminopolyether der allgemeinen Strukturformel 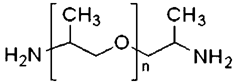 entsteht, worin auch entsprechende Konstitutionsisomere umfasst sind und n für eine Zahl von 2 bis 8, vorzugsweise 2,5 bis 6,5 und besonders bevorzugt 2,5 bis 4,5 steht.

Die Erfindung beruht auf der überraschenden Beobachtung, dass die erfindungsgemäß einzusetzenden 2-Komponenten-Beschichtungsmittel auf Basis von aliphatischen Polyisocyanaten und bestimmten Polyasparaginsäureester-Mischungen eine in gleichem Maße gute Haftung zu mineralischen und insbesondere bituminösen Untergründen zeigen und dabei überraschend temperaturstabil sind.

Die Grundierung von mineralischen Untergründen mit Grundierungsanstrichen auf Basis von Polyisocyanaten und Polyasparaginsäureestern ist prinzipiell bekannt und wird beispielhaft beschrieben in der WO2019101690A1. In dieser Veröffentlichung finden sich aber keine Hinweise auf die Verwendung der erfindungsgemäß einzusetzenden Polyasparaginsäureester-Mischungen. Die erfindungsgemäß einsetzbaren Polyasparaginsäureester-Mischungen werden in der WO2023020960A1 beschrieben, eingesetzt werden sie im Rahmen dieser Veröffentlichung zur Herstellung von Beschichtungen, insbesondere Fußbodenbeschichtungen, jedoch finden sich in dieser Anmeldung keinerlei Hinweise auf eine mögliche Verwendung derartiger 2-Komponenten-Beschichtungsmittel unter heiß aufzubringendem Gussasphalt.

Im ersten Arbeitsschritt des erfindungsgemäßen Verfahrens wird der saubere und tragfähige Betonuntergrund grundiert mit einer Grundierung auf Basis von aliphatischen Polyisocyanaten und Polyasparaginsäureester-Mischungen.

Zur Herstellung der Grundierung geeignete Polyisocyanate A1) sind prinzipiell bekannt und werden mit Hilfe geeigneter Modifizierungsreaktionen, wie z. B. Dimerisierung, Trimerisierung, Biuretisierung, Allophanatisierung und/oder Urethanisierung von Hexamethylendiisocyanat und/oder Isophorondiisocyanat und/oder Pentamethylendiisocyanat, vorzugsweise ausschließlich Hexamethylendiisocyanat, hergestellt, wobei überschüssiges monomeres Diisocyanat anschließend destillativ aus dem Gemisch entfernt wird, wodurch die Polyisocyanate Restgehalte an monomerem Diisocyanat von <0,5%, bevorzugt <0,3%, besonders bevorzugt <0,1% bez. auf das Gesamtgemisch der Polyisocyanatmischung enthalten.

Bevorzugt als Komponente i) geeignete Polyisocyanate sind die an sich bekannten Uretdion-, Isocyanurat-, Iminooxadiazindion-, Urethan-, Allophanat-, Biuret- und/oder Oxadiazintriongruppen enthaltende Derivate des Hexamethylendiisocyanats, die bei 23°C eine Viskosität von 200 bis 3.000 mPas, einen Gehalt an Isocyanatgruppen von 16 bis 24 Gew.-%, vorzugsweise 17 bis 23,5 Gew. -% und eine durchschnittlichen Isocyanat Funktionalität von mindestens 2,3 bevorzugt mindestens 2,7 aufweisen. Deratige Polyisocyanate sind beispielhaft beschrieben in Laas et al., J. Prakt. Chem. 336, 1994, 185-200, DE-A 1 670 666, DE-A 3 700 209, DE-A 3 900 053, EP-A 0 330 966, EP-A 0 336 205, EP-A 0 339 396 und EP-A 0 798 299. Bevorzugt einsetzbar als Komponente sind Polyisocyanate oder Polyisocyanatgemische auf Basis von Hexamethylendiisocyanat mit Allophanatstrukturen und/oder Isocyanuratstrukturen und/oder Iminooxadiazindion-strukturen, einem Isocyanatgruppengehalt von 17% bis 23,5% und einer Viskosität von weniger als 1500mPas bei 23°C.

In einer besonderen Ausführungsform der vorliegenden Erfindung können erfindungsgemäß Alkoxysilangruppen-aufweisende Polyisocyanatgemische als Polyisocyanatkomponente A1) eingesetzt werden, die den vorstehend gemachten Angaben bezüglich Isocyanatgruppengehalt und Viskosität entsprechen. Derartige Polyisocyanatgemische können erhalten werden durch Umsetzung von Polyisocyanaten mit funktionellen Silanen, die eine funktionelle Gruppe aufweisen, die mit den Isocyanatgruppen der Polyisocyanate reagieren können oder durch spezielle Verfahren, wie sie beispielhaft beschrieben werden in der DE 102009047964 A1 und der DE 102007032666 A1.

Die zur Herstellung der Grundierung geeigneten Polyasparaginsäureester-Mischungen B1) enthalten zum einen den Polyasparaginsäureester i) und zum anderen den Polyasparaginsäureester ii). Die Herstellung des aminofunktionellen Polyasparaginsäureesters i) erfolgt in an sich bekannter Weise durch Umsetzung von Diaminodicyclohexylmethan mit Malein- oder Fumarsäure-diethylester, wobei überschüssiger Malein- oder Fumarsäure-diethylester bevorzugt destillativ entfernt wird, so dass der Restgehalt an Malein- oder Fumarsäurediethylester weniger als 0,2 Gew% beträgt, bevorzugt weniger als 0,1 Gew%.

Weiterhin enthalten die zur Herstellung der Grundierung einsetzbaren Polyasparaginsäureester-Mischungen mindestens einen weiteren Polyasparaginsäureester ii) der allgemeinen Formel 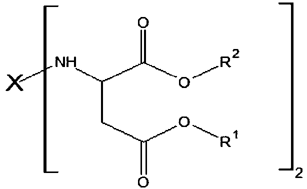 in der R1 und R2 unabhängig voneinander für eine Methylgruppe oder eine Ethylgruppe stehen, vorzugsweise für eine Ethylgruppe und X für einen 2-wertigen organischen Rest steht, der durch Entfernung der Aminogruppen aus einem Aminopolyether der allgemeinen Strukturformel

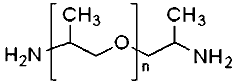

Entsteht, worin auch entsprechende Konstitutionsisomere umfasst sind und n für eine Zahl von 2 bis 8, vorzugsweise 2,5 bis 6,5, besonders bevorzugt 2,5 bis 4,5 steht.

Die Herstellung der aminofunktionellen Polyasparaginsäureester (ii) erfolgt in an sich bekannter Weise durch Umsetzung von Aminopolyethern der oben genannten Strukturformel mit Malein- oder Fumarsäuredimethylester und/oder Malein- oder Fumarsäurediethylester, bevorzugt Malein- oder Fumarsäurediethylester, wobei überschüssiger Malein- oder Fumarsäure-diethylester bevorzugt destillativ entfernt wird, so dass der Restgehalt an Malein- oder Fumarsäurediethylester weniger als 0,2 Gew% beträgt, bevorzugt weniger als 0,1 Gew%.

Im erfindungsgemäßen Verfahren entspricht das Massenverhältnis Polyasparaginsäureester i) zu Polyasparaginäureester ii) in den Polyasparaginsäureester Mischungen B1) 95:5 bis 15:85. Für die Abdichtungen bevorzugt 80:20 bis 95:5. Für Grundierungen bevorzugt 20:80 bis 25:75.

Die Komponenten A1) und B1) können gegebenenfalls mit den aus der Beschichtungstechnologie üblichen Hilfs- und Zusatzstoffen C1) formuliert werden. Genannt seien in diesem Zusammenhang Füllstoffe, Flammschutzmittel, Pigmente, Verlaufshilfsmittel, reaktive Verdünner, Lösemittel, Weichmacher oder Stabilisatoren wie Antioxidationsmittel oder Radikalfänger. Der Massenanteil an Komponente C1) in der Grundierung beträgt typischerweise weniger als 10 Gew% bezogen auf das Gesamtgewicht der 2-Komponenten-Grundierung, bevorzugt weniger als 5 Gew%. Besonders bevorzugt enthalten die Grundierungsformulierungen keine organischen Lösemittel oder Weichmacher.

Die zur Herstellung der Grundierungsschicht geeigneten Polyasparaginsäureester- Mischungen B2) entsprechen in ihrer Zusammensetzung den vorstehend charakterisierten Polyasparaginsäureester-Mischungen B1) und enthalten mindestens die Komponenten i) und ii). Hierbei entspricht das Massenverhältnis Polyasparaginsäureester i) zu Polyasparaginäureester ii) in den Polyasparaginsäureester Mischungen der Grundierungsschicht B2) 65:35 bis 95:5, bevorzugt 85:15 bis 95:5.

Zur Herstellung der im Arbeitsschritt 1 des erfindungsgemäßen Verfahrens einzusetzenden 2-Komponenten-Grundierungen werden die Komponenten A1) und B1), gegebenenfalls enthaltend Hilfs- und Zusatzstoffe C1) unmittelbar vor der Applikation vermischt, wobei das Mischungsverhältnis so eingestellt wird, dass pro NH-Gruppe der Komponente B1) 0,9 bis 1,6 Isocyanatgruppen der Komponente A1) eingesetzt werden, vorzugsweise 1,0 bis 1,4. Die Grundierung wird unmittelbar nach dem Mischvorgang auf den sauberen und tragfähigen Untergrund appliziert durch Streichen, Rollen oder Rakeln, typischerweise mit einem Flächenverbrauch von 0,3 bis 0,5kg/m². Die im Arbeitsschritt 1 des erfindungsgemäßen Verfahrens einzusetzenden Grundierungen haben eine Verarbeitungszeit von ca. 20 Minuten und sind nach ca. 1 Stunde begehbar.

Im Arbeitsschritt 2 des erfindungsgemäßen Verfahrens wird auf die Abdichtungsschicht, typischerweise unmittelbar nach deren Aushärtung eine Grundierungsschicht, auf Basis von aliphatischen Polyisocyanaten A2) und Polyasparaginsäureester-Mischungen B2) aufgebracht. Als Isocyanatkomponente A2) sind Isocyanatgruppen aufweisende Prepolymere mit einem NCO-Gehalt von 7 bis 12 Gew.-%, vorzugsweise 7,5 bis 11 Gew.-%, besonders bevorzugt 8 bis 10 Gew.-%, geeignet, die im Wesentlichen den Vorgaben der eigenen Patentanmeldung EP 3115388 A1 entsprechen. Geeignete Isocyanatgruppen aufweisende Prepolymere sind erhältlich durch Umsetzung mindestens eines Polyisocyanats mit einem oder mehreren hydroxyfunktionellen Polyethern, die durch Alkoxylierung von hydroxyfunktionellen Starterverbindungen mit Propylenoxid oder Gemischen aus Propylenoxid und Ethylenoxid unter Zuhilfenahme von Katalysatoren wie beispielsweise basischen Katalysatoren wie Alkalihydroxiden oder auch sog. DMC-Katalysatoren, wie sie in der EP-A 700 949, EP-A 761 708 und WO 97/40086 offenbart werden, erhältlich sind. Einsetzbare Polyether bzw. Polyethermischungen besitzen eine mittlere Hydroxyfunktionalität von 1 bis 3, bevorzugt 1,5 bis 2,5 und ein Äquivalentgewicht von mindestens 400 g/Mol, bevorzugt 500 bis 4000 g/Mol, besonders bevorzugt 700 bis 2000g/Mol.

Als Polyisocyanate zur Herstellung der Isocyanatgruppen aufweisenden Prepolymere A2) kommen aliphatische und cycloaliphatische Polyisocyanate der bekannten Art in Betracht: Beispielhaft genannt seien 4,4'-Diisocyanatodicyclohexylmethan, 3-Isocyanatomethyl-3,3,5-trimethylcyclohexylisocyanat (Isophorondiisocyanat = IPDI), Hexamethylendiisocyanat (HDI), 2-2,2,4-Trimethylhexamethylendiisocyanat (THDI) und a,a,a',a'-Tetramethyl-m-xylylen-diisocyanat oder a,a,a',a'-Tetramethyl-p-xylylendiisocyanat (TMXDI) sowie aus diesen Verbindungen bestehende Gemische. Zur Herstellung der Isocyanatgruppen aufweisenden Prepolymere werden das Polyisocyanat und das Polyoxyalkylenpolyol oder Gemische daraus unter Einhaltung eines NCO/OH Äquivalentverhältnisses von 1,5:1 bis 10:1 unter Urethanbildung umgesetzt. Die Umsetzung findet statt bei Temperaturen von 40° bis 140° C, vorzugsweise 50° bis 110° C. Bei Verwendung eines Überschusses an Polyisocyanat von mehr als 2:1 wird überschüssiges monomeres Polyisocyanat nach der Umsetzung durch in der Technik übliche destillative oder extraktive Verfahren, z. B. durch Dünnschichtdestillation entfernt. Die so erhältlichen Isocyanatgruppen aufweisenden Prepolymere besitzen einen Gehalt an freien Isocyanatgruppen, der für die erfindungsgemäße Verwendung häufig zu niedrig ist. Deshalb müssen die so hergestellten Isocyanatgruppen aufweisenden Prepolymere mit niedrigviskosen Polyisocyanaten der vorstehend genannten Art, vorzugsweise Polyisocyanaten auf Basis von Hexamethylendiisocyanat abgemischt werden, damit sie den oben gemachten Angaben bezüglich des NCO-Gehaltes entsprechen.

Besonders bevorzugt ist die Verwendung von Isocyanatgruppen aufweisenden Prepolymeren A2), die durch direkte Umsetzung der oben beschriebenen Polyetherpolyole mit den vorstehend beschriebenen Polyisocyanaten auf Basis von Hexamethylendiisocyanat erhalten werden. So können in einem einzigen Reaktionsschritt Isocyanatgruppen aufweisende Prepolymere hergestellt werden, die den vorstehend gemachten Angaben entsprechen und im Sinne der Erfindung besonders bevorzugt als Komponente A2) einsetzbar sind.

Die zur Herstellung der Abdichtungsschicht geeigneten Polyasparaginsäureester- Mischungen B2) entsprechen in ihrer Zusammensetzung den vorstehend charakterisierten Polyasparaginsäureester-Mischungen B1) und enthalten mindestens die Komponenten i) und ii). Hierbei entspricht das Massenverhältnis Polyasparaginsäureester i) zu Polyasparaginäureester ii) in den Polyasparaginsäureester Mischungen der Abdichtungsschicht B2) 65:35 bis 95:5, bevorzugt 80:20 bis 95:5.

Darüber hinaus können die Komponenten A2) und B2) mit den bereits genannten, aus der Beschichtungstechnologie üblichen Hilfs- und Zusatzstoffen C2) formuliert werden. Genannt seien in diesem Zusammenhang Füllstoffe, Pigmente, Verlaufshilfsmittel, reaktive Verdünner, Lösemittel, Weichmacher oder Stabilisatoren wie Antioxidationsmittel oder Radikalfänger. Bevorzugt enthält die Komponente B2) im Rahmen der Komponente C2) anorganische Flammschutzmittel sowie ggf. zusätzlich organische Flammschutzmittel. Als bevorzugt einsetzbare anorganische Flammschutzmittel seien Aluminiumhydroxid und Magnesiumhydroxid genannt. Als organische Flammschutzmittel seien insbesondere Phosphorsäureester genannt wie beispielsweise Triethylphosphat, Tributylphosphat, Tris-2-ethylhexylphosphat, Triphenylphosphat, Diphenyloctylphosphat oder Trikresylphosphat. Weiterhin bevorzugt enthalten die Komponente A2 und/oder B2) Alterungsschutzmittel wie Antioxidationsmittel und Radikalfänger wie insbesondere sterisch gehinderte Amine.

Der Massenanteil an Komponente C2 in der Abdichtungsformulierung beträgt typischerweise weniger als 50 Gew% bezogen auf das Gesamtgewicht der 2-Komponenten-Abdichtungsformulierung, bevorzugt weniger als 40 Gew%, besonders bevorzugt weniger als 35 Gew%. Hierbei werden pulverförmige Bestandteile der Komponente C1 wie Füllstoffe, anorganische Flammschutzmitte und Pigmente bevorzugt in die Komponente B2) eingearbeitet. Besonders bevorzugt enthalten die Abdichtungsformulierungen keine organischen Lösemittel oder Weichmacher.

Zur Herstellung der im Arbeitsschritt 2 des erfindungsgemäßen Verfahrens einzusetzenden Abdichtungsschicht werden die Komponenten A2) und B2), gegebenenfalls enthaltend Hilfs- und Zusatzstoffe C2) unmittelbar vor der Applikation vermischt, wobei das Mischungsverhältnis so eingestellt wird, dass pro NH-Gruppe der Komponente B2) 0,9 bis 1,6 Isocyanatgruppen der Komponente A2) eingesetzt werden, vorzugsweise 1,0 bis 1,4. Die Abdichtungsschicht ist unmittelbar nach dem Mischvorgang verarbeitungsfähig und wird auf die Grundierungsschicht, typischerweise unmittelbar nach deren Aushärtung, aufgebracht. Der Auftrag erfolgt hierbei bevorzugt in Kombination mit einem textilen Flächengebilde. Mit diesem Begriff sind alle gewirkten, gestrickten, gewebten, geflochtenen, gehäkelten oder auf sonstige Art aus Garnen oder Fasern hergestellten Flächengebilde gemeint. Geeignete textile Flächengewebe basieren auf organischen oder anorganischen Fasern, wie beispielsweise Glasfasern, Kohlefasern oder Kunststofffasern, wie beispielsweise Polyester-, Polyamid-, Aramid- oder Polyacrylatfasern, Metallfasern oder Fasern mit metallischen Bestandteilen o. dgl. Vorzugsweise werden Vliesmaterialien eingesetzt wie beispielsweise Glasfaservliese oder Polyestervliese. Vorzugsweise werden die Flächengebilde, insbesondere in Form von Polyestervliesen, mit einem Flächengewicht von 50 bis 300 g/m² oder 75 bis 250 g/m², besonders bevorzugt 110 bis 165 g/m² im erfindungsgemäßen Verfahren eingesetzt. Hierdurch ist neben einer mechanischen Verstärkung gleichzeitig eine Kontrolle der aufgebrachten Schichtdicke der Abdichtungsschicht gewährleistet.

Die Verarbeitung erfolgt im erfindungsgemäßen Verfahren dabei so, dass zunächst eine Lage der abzudichtende Teil eines Bauwerks zunächst mit der vorgemischten 2-Komponenten-Abdichtungsmasse beschichtet wird durch Streichen, Rollen oder Rakeln, dann wird das textile Flächengebilde, vorzugsweise ein Vlies in die flüssige Abdichtungsmasse eingelegt und abschließend wird das Flächengebilde mit einer weiteren Lage der vorgemischten 2-Komponenten-Abdichtungsmasse durch Streichen, Rollen oder Rakeln beschichtet. Hierbei wird das Flächengebilde vorzugsweise so überarbeitet, dass dieses vollständig mit dem reaktiven Beschichtungssystem durchtränkt ist und sich eine homogene Oberflächenstruktur ergibt.

Die im Arbeitsschritt 2 des erfindungsgemäßen Verfahrens einzusetzenden Abdichtungsmassen haben eine Verarbeitungszeit von ca. 20 Minuten und sind nach ca. 3 Stunden begehbar und überarbeitbar. Der Flächenverbrauch beträgt 2,5 kg/m² bis 4 kg/m² vorzugsweise. 3 kg/m² bis 3,5 kg/m. Damit wird sichergestellt, dass die Abdichtungsschicht im erfindungsgemäßen Verfahren nach Aushärtung eine Mindestschichtdicke von 2 mm aufweist.

Im 3. Arbeitsschritt des erfindungsgemäßen Verfahrens wird auf die Abdichtungsschicht eine Haftschicht auf Basis von aliphatischen Polyisocyanaten und Polyasparaginsäure-ester-Mischungen aufgebracht. Hierbei wird die 2-Komponenten-Abdichtungsmasse aus dem 2. Arbeitsschritt bestehend aus den Komponenten A2) und B2) sowie gegebenenfalls C2) überbeschichtet mit einer 2-Komponenten-Beschichtungsmasse, die in ihrer Zusammensetzung im Wesentlichen aus den Komponenten A2), B2) sowie gegebenenfalls C2) besteht. Der Auftrag erfolgt in einer vergleichsweise dünnen Schicht durch Streichen, Rollen oder Rakeln, entsprechend einem Flächenverbrauch von 200g/m² bis 300g/m².

Im 4. Arbeitsschritt des erfindungsgemäßen Verfahrens wird in die flüssige Haftschicht aus dem 3. Arbeitsschritt Quarzsand eingestreut, vorzugsweise Quarzsand mit einer Korngröße von 0,3mm bis 1,2 mm. Hierbei ist darauf zu achten, dass der Quarzsand vollflächig eingestreut wird. Dies ist bei einem Auftrag von ca. 3,5 kg Sand pro Quadratmeter gewährleistet.

Im 5. Arbeitsschritt des erfindungsgemäßen Verfahrens wird mindestens eine Verschleißschicht aus Gussasphalt auf die ausgehärtete Haftschicht aufgebracht.

Hierbei handelt es sich um Gussasphalt nach DIN-EN13108-6 oder Gussasphaltestrich nach DIN-EN13813, der nach gängigen Verfahren der Technik eingebaut wird, vorzugsweise durch Aufbringen, Verteilen und Verstreichen im Temperaturbereich zwischen 180°C und 230°C, vorzugsweise 180°C bis 200°C. Besonders bevorzugt handelt es sich um Gussasphaltestrich nach DIN 18560-1 aus Gussasphaltestrichmörtel nach DIN EN 13813 der Härteklasse AS IC 40. Der Gussasphaltestrich wird dabei typischerweise in einer Schichtdicke von 2 mm bis 4,5 mm aufgetragen, bevorzugt 2,5 mm bis 4 mm. Gegebenenfalls kann auf den Gussasphalt eine weitere Verschleißschicht aufgebracht werden, vorzugsweise ebenfalls auf Basis von Gussasphalt oder Gussasphaltestrich.

In einer besonders bevorzugten Ausführungsform des erfindungsgemäßen Verfahrens werden nur Bauwerkdetails wie Durchbrüche oder Stützen sowie Anschlüsse an aufgehende Bauteile im erfindungsgemäßen Verfahren ausgeführt. Hierbei wird die Abdichtungsschicht in den gut zugänglichen Bereichen mit Hilfe von Polymerbitumen-Schweißbahnen entsprechend den Vorgaben der DIN EN 18532-2, durch Aufschweißen auf eine geeignete Grundierungsschicht hergestellt. Als geeignete Grundierungsschichten seien in diesem Zusammenhang die aus der Betontechnologie allgemein bekannten Grundierungsschichten auf Basis von Polyaminen und Epoxidharzen genannt, sowie die Grundierungsschichten des erfindungsgemäßen Verfahrens. In der hier vorgeschlagenen, besonders bevorzugten Ausführungsform des erfindungsgemäßen Verfahrens werden anschließend die Detail- oder Anschlussbereiche im erfindungsgemäßen Verfahren abgedichtet, wobei durch hinreichende Überlappung neben der Abdichtung auch eine kraftschlüssige Verbindung zu den Polymerbitumen-Schweißbahnen hergestellt wird.

Im 1. Arbeitsschritt wird die Grundierungsschicht wie vorstehend beschrieben auf die Polymerbitumen-Schweißbahn einerseits und die gegebenenfalls grundierten oder anderweitig vorbehandelten mineralischen Untergründen der Detailbereiche andererseits aufgebracht.

Im 2. Arbeitsschritt wird die Abdichtungsschicht wie vorstehend beschrieben auf die Bereiche des Arbeitsschritts 1 aufgetragen.

Im 3. Arbeitsschritt wird die Haftschicht wie vorstehend beschrieben auf die Abdichtungsschicht aus Arbeitsschritt 2 aufgetragen.

Im 4. Arbeitsschritt wird in die noch flüssige Haftschicht vollflächig Quarzsand wie vorstehend beschrieben eingeworfen.

Im 5. Arbeitsschritt wird die Verschleißschicht aus Gussasphalt wie vorstehend beschrieben aufgebracht.

Bei Versuchen zu dieser besonders bevorzugten Ausführungsform des erfindungsgemäßen Verfahrens hat sich überraschenderweise herausgestellt, dass die Grundierungs- und die Abdichtungsschicht des erfindungsgemäßen Verfahrens eine besonders gute Haftung zu den marktüblichen Schweißbahnen aufweist, so dass eine sichere Abdichtung bereits bei Überlappungen von ca. 10 cm sichergestellt ist. Somit lassen sich im erfindungsgemäßen Verfahren besonders vorteilhaft Abdichtungen von Bauwerksdetails und Wandanschlüsse herstellen.

Die nachfolgenden Beispiele und Zeichnungen sollen das erfindungsgemäße Verfahren näher erläutern und beschreiben.

### Patentbeispiele:

In den folgenden Beispielen 1 bis 8 wird zunächst die Herstellung der, in den erfindungsgemäßen Systemaufbauten verwendeten, Flüssigkunststoffen zu den Grundierungen, Abdichtungen und Haftschichten erläutert. In den Beispielen kann mit den Flüssigkunststoffen die zur Ausbildung der Abdichtungsschicht verwendet werden, ebenfalls die Haftschicht erstellt werden, daher werden diese Flüssigkunststoffe vereinfacht als "Beschichtung 1", bzw. "Beschichtung 2" bezeichnet.

### Rohstoffe:

### Polyasparaginsäureester 1:

^{®}Desmophen NH 1423 LF, handelsüblicher Polyasparaginsäureester auf Basis von Maleinsäurediethylester und 4,4'-Diaminodicyclohexylmethan mit einem Restgehalt an Fumarsäurediethylester von <0,1 Gew%, Handelsprodukt der Fa. Covestro, Leverkusen

### Polyasparaginsäureester 2:

^{®}Desmophen NH 1723 LF, kommerziell erhältlicher Polyasparaginsäureester auf Basis eines Polyetheramins entsprechend der vorstehend genannten Formel mit einem NH-Äquivalentgewicht von 295 entsprechend n = 2,85 und einem Restgehalt an Fumarsäurediethylester von <0,1 Gew.-%, Handelsprodukt der Fa. Covestro, Leverkusen

### Polyasparaginsäureester 3:

430 g Jeffamin D400 (Polyetheramin der Fa. Huntsman International LLC entsprechend der vorstehend genannten Formel mit n=6,1) werden bei 40°C unter Rühren tropfenweise mit 344g Maleinsäurediethylester versetzt. Die Reaktionsmischung wird 8 Stunden bei 40°C gerührt und anschließend weitere 24 Stunden bei Raumtemperatur. Nach einer Lagerdauer von 30 Tagen ist die Reaktion weitestgehend abgeschlossen und das Produkt kann zur Formulierung von Klebstoffen eingesetzt werden. Das Reaktionsprodukt hat ein NH-Äquivalentgewicht von 387.

### Polyisocyanat 1:

Aliphatisches Polyisocyanat auf Basis von Hexamethylendiisocyanat mit Polyisocyanuratstruktur, NCO-Gehalt von 23% und einer Viskosität von 1200mPas (23°C), Tolonate HDT-LV, Handelsprodukt der Fa. Vencorex Holding, Sait-Priest, Frankreich.

### Polyisocyanat 2:

Aliphatisches Polyisocyanat auf Basis von Hexamethylendiisocyanat mit Polyisocyanurat- und Allophanat-Struktur, NCO-Gehalt von 19% und einer Viskosität von 290mPas (23°C), Basonat HA 3000, Handelsprodukt der Fa. BASF SE, Ludwigshafen.

### Herstellung der Flüssigkunststoffe zur Grundierung (Grundierung1 bis 3)

### Beispiel 1: Herstellung Grundierung 1 (erfindungsgemäß)

250 g des Polyasparaginsäureesters 1, 650 g des Polyetherasparaginsäureesters 2, 99,8 g eines Polypropylenglykol-Polyethers vom Molekulargewicht 2000 und 0,02 g eines phenolischen Antioxidationsmittels (^{®}*Irganox 1076,* Handelsprodukt der Fa. BASF SE, Ludwigshafen) werden mit einem handelsüblichen Flügelrüher homogen gemischt. 718 g dieser Mischung werden mit 520 g des Polyisocyanats 1 durch Rühren bei einer Temperatur von 21°C intensiv vermischt. Es entsteht eine gebrauchsfertige Beschichtungsmasse mit einer Topfzeit von 20 Minuten.

### Beispiel 2: Herstellung Grundierung 2 (erfindungsgemäß)

300 g des Polyasparaginsäureesters 1, 600 g des Polyasparaginsäureesters 3, 99,8 g eines Polypropylenglykololy-Polyethers vom Molekulargewicht 2000 und 0,02 g eines phenolischen Antioxidationsmittels (^{®}*Irganox 1076,* Handelsprodukt der Fa. BASF SE, Ludwigshafen) werden mit einem handelsüblichen Flügelrüher homogen gemischt.

750 g dieser Mischung werden mit 520 g des Polyisocyanats 1 durch Rühren bei einer Temperatur von 21°C intensiv vermischt. Es entsteht eine gebrauchsfertige Beschichtungsmasse mit einer Topfzeit von 20 Minuten.

### Beispiel 3: nicht erfindungsgemäß, Herstellung Grundierung 3 (Epoxidharzgrundierung-Grundierung)

Handelsübliche 2-Komponenten-Betongrundierung auf Basis von Epoxidharzen und Polyaminen, Vedapont EP/N, Handelsprodukt der Fa. BMI Deutschland GmbH, Oberursel.

Die Grundierung wurde entsprechend den Angaben des technischen Datenblattes des Herstellers hergestellt.

### Beispiel 4: nicht erfindungsgemäßes Vergleichsbeispiel mit Bezug zur WO2019101690A1

### Herstellung Grundierung 4 (ohne Asparaginsäureester auf Basis von Polyetheramin ii))

900 g des Polyasparaginsäureesters 1, 99,8 g eines Polypropylenglykol-Polyethers vom Molekulargewicht 2000 und 0,02 g eines phenolischen Antioxidationsmittels (^{®}*Irganox 1076,* Handelsprodukt der Fa. BASF SE, Ludwigshafen) werden mit einem handelsüblichen Flügelrüher homogen gemischt.

700 g dieser Mischung werden mit 520 g des Polyisocyanats 1 durch Rühren bei einer Temperatur von 21°C intensiv vermischt. Es entsteht eine gebrauchsfertige Beschichtungsmasse mit einer Topfzeit von 15 Minuten.

### Herstellung der Flüssigkunststoffe zur Abdichtung und Einbettschicht (Beschichtung 1 und 2)

### Beispiel 5: Herstellung Polyasparaginsäureester-Komponente entsprechend B2

In einem handelsüblichen Labordissolver wird eine NH-funktionelle Mischung auf Basis der nachfolgend genannten Komponenten hergestellt:
- Polyasparaginsäureester 1, 510 g
- Polyetherasparaginsäureester 2, 90 g
- Polypropylenglykol-Polyether vom Molekulargewicht 2000, Fa. Syskem Chemie GmbH, Wuppertal 110g
- Martinal ON 313, Aluminiumhydroxid der Fa. Martinswerk GmbH, Bergheim 740g
- Eisenoxid-Pigment Bayferrox schwarz 306 der Fa. Lanxess Deutschland GmbH, Köln 10g
- Tris-2-Ethylhexylphosphat, Disflamoll TOF der Fa. Lanxess Deutschland GmbH, Köln 66g
- Titandioxid-Weißpigment, Kronos 1001 der Fa. Kronos International, Leverkusen 66g
- Schwerspat, Bariflor 9210 der Fa. Minerals Girona SA, Spanien 110g
- Kieselsäure HDK H18, Thixotropiermittel der Fa. Wacker Chemie AG, München 6g
- Entschäumer BYK 066 der Fa. Byk Chemie, Wesel 2g
- Tinuvin B75, Licht- und UV-Schutzmittel der Fa. BASF SE, Ludwigshafen 5g

### Beispiel 6: Herstellung Polyasparaginsäureester-Komponente entsprechend B2

In einem handelsüblichen Labordissolver wird eine NH-funktionelle Mischung auf Basis der nachfolgend genannten Komponenten hergestellt:
- Polyasparaginsäureester 1, 330g
- Polyasparaginsäureester 3, 450 g
- Polypropylenglykol-Polyether vom Molekulargewicht 2000, Fa. Syskem Chemie GmbH, Wuppertal, 110g
- Martinal ON 313, Aluminiumhydroxid der Fa. Martinswerk GmbH, Bergheim 740g
- Eisenoxid-Pigment Bayferrox schwarz 306 der Fa. Lanxess Deutschland GmbH, Köln 10g
- Tris-2-Ethylhexylphosphat, Disflamoll TOF der Fa. Lanxess Deutschland GmbH, Köln 66g
- Titandioxid-Weißpigment, Kronos 1001 der Fa. Kronos International, Leverkusen 66g
- Schwerspat, Bariflor 9210 der Fa. Minerals Girona SA, Spanien 110g
- Kieselsäure HDK H18, Thixotropiermittel der Fa. Wacker Chemie AG, München 6g
- Entschäumer BYK 066 der Fa. Byk Chemie, Wesel 2g
- Tinuvin B75, Licht- und UV-Schutzmittel der Fa. BASF SE, Ludwigshafen 5g

### Beispiel 7: Herstellung der Polyisocyanat-Prepolymer-Komponente entsprechend A2

2200 g des handelsüblichen Allophanatgruppen und Isocyanuratgruppen aufweisenden Polyisocyanates auf Basis von Hexamethylendiisocyanat, mit einem NCO-Gehalt von 19 % und einer Viskosität von 290 mPas (23°C) aus Beispiel 2 (Basonat HA 3000, Handelsprodukt der Firma BASF SE, Ludwigshafen) werden mit 1800 g eines auf Propylenglykol gestarteten Polypropylenoxidpolyethers vom mittleren Molekulargewicht 2000 bei einer Temperatur von 80°C für 15 Stunden unter Rühren zur Reaktion gebracht. Dabei erhält man eine Polyisocyanatmischung mit einem NCO-Gehalt von 8,5 % und einer Viskosität von 2900 mPas (23°C).

### Beispiel 8: Herstellung Beschichtung1

718 g der aminfunktionellen Mischung aus Beispiel 5 werden mit 480 g des Polyisocyanates aus Beispiel 7 durch Rühren mit einem Spatel bei einer Temperatur von 21°C intensiv vermischt. Es entsteht eine gebrauchsfertige Beschichtungsmasse mit einer Topfzeit von 25 Minuten.

### Beispiel 9: Herstellung Beschichtung2

680 g der aminfunktionellen Mischung aus Beispiel 6 werden mit 490 g des Polyisocyanates aus Beispiel 7 durch Rühren bei einer Temperatur von 21°C intensiv vermischt. Es entsteht eine gebrauchsfertige Beschichtungsmasse mit einer Topfzeit von 25 Minuten.

### Abdichtung unter Gussasphalt mit Polyaspartic Beschichtungssystem

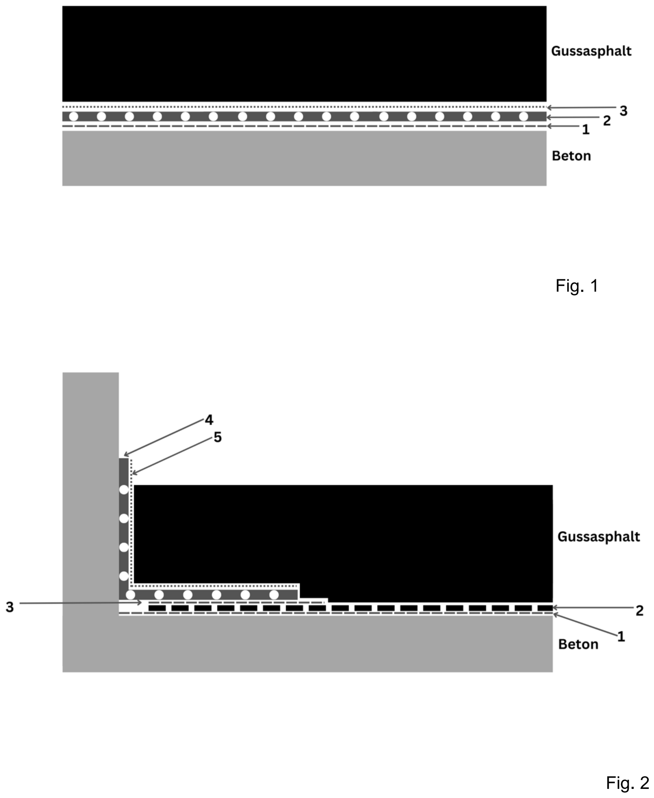

Unter Verwendung der oben beschriebenen Grundierungen und Beschichtungssystemen wurden, Versuchsaufbauten inklusive Gussasphalt entsprechend Abb. 1, hergestellt.

### Beispiele 10 -24: Herstellung der Versuchsaufbauten mit Beschichtung 1, Versuchsserie 1

Arbeitsschritt 1: Die Grundierungen1-4 wurden vollflächig mittels Streichrolle auf eine trockene Betonplatte der Größe 60 × 60 cm aufgebracht. Beschichtet wurde mit einer Menge von ca. 300 g/m² bis 500 g/m².

Arbeitsschritt 2: Nach Aushärtung der Grundierungsschicht wurde mit Beschichtung 1 unter Verwendung eines verstärkenden Polyester-Vlieses (Frankolon Polyestervlies 110 g/m² der Fa. Franken Systems GmbH, Gollhofen) die Abdichtungsschicht hergestellt, wobei die Auftragsmenge ca. 3,5 kg/m² entsprach.

Arbeitsschritt 3: Nach Aushärtung der Abdichtungsschicht wurde mit dem gleichen Beschichtungssystem (Beschichtung1) eine neue Lage des Flüssigkunststoffs als Haftschicht appliziert, wobei die Auftragsmenge ca. 200 g/m² bis 300 g/m² betrug.

Arbeitsschritt 4: In die noch flüssige Haftschicht wurden in einer Versuchsreihe eine handelsüblichen Quarzsandmischung der Körnung 0,3 - 0,9 mm eingeworfen.

Als nicht erfindungsgemäßes Vergleichsbeispiel im Hinblick auf die WO2013185156A1 wurde in einer weiteren Versuchsreihe ein kommerziell erhältliches Schmelzklebstoff-Granulat (Sikalastic^{®}-827 HT (Handelsprodukt der Fa *Sika Deutschland GmbH, Stuttgart*) in die noch flüssige Haftschicht eingestreut.

Überschüssiges Einstreumaterial wurde nach der Aushärtung der Zwischenschicht abgefegt. Eine Versuchsreihe ohne Einstreuung von Sand oder Schmelzklebstoff diente als Referenz.

Arbeitsschritt 5: Auf diese Versuchsflächen wurde eine 6 cm dicke Schicht von Gussasphalt mit einer Temperatur von ca. 190°C aufgebracht. Eine Zeichnung des Aufbaus ist der Abb. 1 zu entnehmen. Nach Erkalten der Fläche wurde die Haftzugfestigkeit in Anlehnung an die DIN EN 13596 "Abdichtungsbahnen - Abdichtungssysteme auf Beton für Brücken und andere Verkehrsflächen - Bestimmung der Abreißfestigkeit" bewertet. Die Bewertung erfolgte entsprechend den folgenden Kriterien.

| |
|---|
| ++ = sehr gute Haftung |
| + = gute Haftung |
| 0 = geringe Haftung |
| - = keine Haftung |

| Aufbau mit Abdichtung **Beschichtung 1** | | | |
|---|---|---|---|
| | ohne Einstreuung | Quarzsandmischung 0,3 - 0,9 mm | Schmelzkleber Sikalastic^{®}-827 HT |
| | | (Haftschicht: **Beschichtung 1)** | (Haftschicht: **Beschichtung 1)** |
| ohne Grundierung | Bsp. 10, | Bsp. 15, | Bsp. 20, |
| | Bewertung: + | Bewertung: - | Bewertung: - |
| Grundierung 1 | Bsp. 11, | Bsp. 16, | Bsp. 21, |
| | Bewertung: + | Bewertung: ++ | Bewertung: 0 |
| Grundierung 2 | Bsp. 12, | Bsp. 17, | Bsp. 22, |
| | Bewertung: 0 | Bewertung: ++ | Bewertung: 0 |
| Grundierung 3 | Bsp. 13, | Bsp. 18, | Bsp. 23, |
| | Bewertung: + | Bewertung: + | Bewertung: 0 |
| Grundierung 4 | Bsp. 14, | Bsp. 19, | Bsp. 24, |
| | Bewertung: 0 | Bewertung + | Bewertung: 0 |

### Beispiele 25 -27: Herstellung der Versuchsaufbauten mit Beschichtung 2, Versuchsserie 2

Entsprechend der Durchführung geschildert in Versuchsserie 1, wurden die Hafteigenschaften unter Verwendung der Beschichtung 2 in den in den folgenden Aufbauten untersucht

| Aufbau mit Abdichtung **Beschichtung 2** | | | |
|---|---|---|---|
| | ohne Einstreuung | Quarzsandmischung 0,3 - 0,9 mm | Schmelzkleber Sikalastic^{®}-827 HT |
| | | (Haftschicht: **Beschichtung 2)** | (Haftschicht: **Beschichtung 2)** |
| Grundierung1 | Bsp. 25, | Bsp.26, | Bsp. 27, |
| | Bewertung: + | Bewertung: ++ | Bewertung: 0 |

Diese Beispiele 10 bis 27 zeigen die verbesserte Haftung der im erfindungsgemäßen Verfahren hergestellten Versuchsaufbauten im Vergleich zum Stand der Technik.

### Abdichtung unter Gussasphalt mit Polyaspartic-Beschichtungssystem und Bitumenschweißbahn (Versuchsserien 7 bis 10)

Unter Verwendung der oben beschriebenen Grundierungen und Beschichtungssystemen wurden, entsprechend Abb. 2, Versuchsaufbauten inclusive Gussasphalt hergestellt, die die bevorzugten Ausführungsform des erfindungsgemäßen Verfahrens zur Abdichtung von Bauwerkdetails wie Durchbrüchen oder Stützen, sowie Anschlüsse an aufgehende Bauteile zeigt und die die verbesserte Haftung in der Kombination mit einer Polymerbitumen-Schweißbahn belegt.

### Beispiele 28 - 31: Versuchsserie 7

Eine Betonplatte der Größe 60 × 60 cm wird an einer Kante mit Kalksandstein in einer Höhe von 25 cm aufgemauert zur Nachstellung eines aufgehenden Bauteils entsprechend Abbildung 2. Auf die trockenen Betonplatte mit aufgehendem Bauteil wurden die Grundierung 1 bis 4 vollflächig mittels Streichrolle aufgebracht. Beschichtet wurde mit einer Menge von ca. 300 g/m² bis 500 g/m². Hierbei wurde auch der Sockelberiech bis zur Oberkante grundiert.

Nach vollständiger Aushärtung der Grundierung wurde auf die waagerechte Fläche des Bauteils eine handelsübliche Polymerbitumen-Schweißbahn (Vedapont BE, Handelsprodukt der Fa. BMI Deutschland GmbH, Oberursel) mit einem mit Propangas beheizten, im Dachdeckerhandwerk üblichen Gasbrenner aufgeschweißt.

Arbeitsschritt 1: Nach Erkalten der Bitumenbahn wurde diese im Sockelbereich noch einmal ca. 25 cm breit mit der Grundierung1 grundiert.

Arbeitsschritt 2: Nach Aushärtung der Grundierungsschicht wurden mit Beschichtung1 unter Verwendung eines verstärkenden Polyester-Vlieses (Frankolon Polyestervlies 110 g/m² der Fa. Franken Systems GmbH, Gollhofen) die Abdichtungsschicht aufgebracht, wobei sowohl die waagerechte Fläche des ca. 25 cm breiten Sockelbereichs beschichtet wurden als auch die ca. 25 cm hohen senkrechten Flächen des aufgehenden Bauteils. Die Auftragsmenge entsprach ca. 3,5 kg/m².

Arbeitsschritt 3: Nach Aushärtung der Abdichtungsschicht wurde mit dem gleichen Beschichtungssystem (Beschichtung1) eine neue Lage des Flüssigkunststoffs als Haftschicht appliziert, wobei die Auftragsmenge ca. 200 g/m² bis 300 g/m² betrug.

Arbeitsschritt 4: In diese Haftschicht wurden in einer Versuchsreihe mit einer handelsüblichen Quarzsandmischung der Körung 0,3 - 0,9 mm eingestreut; überschüssiges Einstreumaterial wurde nach der Aushärtung der Zwischenschicht abgefegt.

Arbeitsschritt 5: Auf die waagerechte Fläche des Versuchsaufbaus wurde eine 6 cm dicke Schicht von Gussasphalt mit einer Temperatur von ca. 190°C aufgebracht. Eine Zeichnung des Aufbaus ist der Abb. 2 zu entnehmen. Nach Erkalten der Fläche wurde eine Haftzugfestigkeit in Anlehnung an DIN EN 13596 "Abdichtungsbahnen bewertet. Die Bewertung erfolgte entsprechend den folgenden Kriterien.

| Aufbau mit **Beschichtung 1** | |
|---|---|
| | Quarzsandmischung 0,3 - 0,9 mm |
| Grundierung 1 | Bsp. 28, |
| | Bewertung: ++ |
| Grundierung 2 | Bsp. 29, |
| | Bewertung: ++ |
| Grundierung 3 | Bsp. 30, |
| | Bewertung: 0 |
| Grundierung 4 | Bsp. 31, |
| | Bewertung: 0 |

Im Folgenden werden die Erfindung sowie vorteilhafte Ausführungsformen derselben anhand der in den Zeichnungen dargestellten Beispielen näher beschrieben und erläutert.

Es zeigen:
- Fig. 1: eine Abdichtungsschicht, die gemäß dem erfindungsgemäße Verfahre hergestellt wurde; und
- Fig. 2: eine Abdichtung am aufgehenden Bauteil in Kombination mit einer Polymerbitumen-Schweißbahn.

**Fig. 1** ist ein Aufbau einer vollflächig verlegten Abdichtungsschicht zwischen einer Schicht aus Beton 10 und Gussasphalt 20, die gemäß dem erfindungsgemäßen Verfahren hergestellt wurde. Die Abdichtungsschicht umfasst eine Grundierungsschicht 1, eine Abdichtungsschicht 2. Die Abdichtungsschicht 2 kann eine Armierung, insbesondere mit textilem Flächengebilde umfassen. Ferner umfasst die gezeigte Abdichtungsschicht eine Haftschicht mit Quarzsandeinstreuung.

**Fig. 2** ist ein Aufbau einer Abdichtung vollflächig verlegten Abdichtungsschicht zwischen einer Schicht aus Beton 10 und Gussasphalt 20 am aufgehenden Bauteil in Kombination mit einer Polymerbitumen-Schweißbahn Grundierungsschicht dargestellt.

Auf der Schicht aus Beton ist eine Polymerbitumen-Schweißbahn 2 angeordnet, die von einer Grundierungsschicht 3 bedeckt wird. Dann folgt eine Abdichtungsschicht 4, die ggf. incl. Armierung mit textilem Flächengebilde umfassen k. Darauf ist eine Haftschicht mit Quarzsandeinstreuung 5 angeordnet, auf die der Gussasphalt 20 kommt.

## Patentansprüche

1. Verfahren zur anteiligen oder vollflächigen Abdichtung von befahrbaren Verkehrsflächen aus Beton umfassend die folgenden Arbeitsschritte:
1. Untergrundbehandlung mit einer Grundierung auf Basis von aliphatischen Polyisocyanaten und Polyasparaginsäureester-Mischungen
2. Aufbringen einer flüssigen Abdichtungsschicht auf Basis von aliphatischen Polyisocyanaten und Polyasparaginsäureester-Mischungen
3. Aufbringen einer Haftschicht auf Basis von aliphatischen Polyisocyanaten und Polyasparaginsäureester-Mischungen
4. Einstreuen von Quarzsand in die Haftschicht
5. Aufbringen mindestens einer Gussasphalt-Verschleißschicht
**dadurch gekennzeichnet, dass** Polyasparaginsäureester-Mischungen eingesetzt werden, mindestens enthaltend
i) einen Polyasparaginsäureester der Struktur 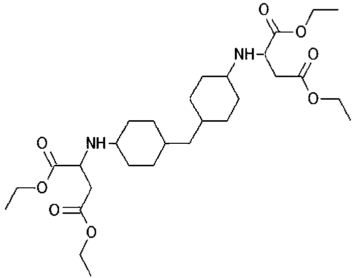
ii) mindestens einem weiteren aminofunktionellen Polyasparaginsäureester der allgemeinen Strukturformel 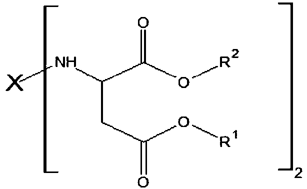 in der R1 und R2 unabhängig voneinander für eine Methylgruppe oder eine Ethylgruppe stehen und X für einen 2-wertigen organischen Rest steht, der durch Entfernung der Aminogruppen aus einem Aminopolyether der allgemeinen Strukturformel 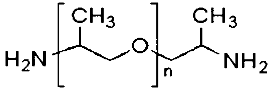 entsteht, worin auch entsprechende Konstitutionsisomere umfasst sind und n für eine Zahl von 2 bis 8, vorzugsweise 2,5 bis 6,5 und besonders bevorzugt 2,5 bis 4,5 steht.

2. Verfahren gemäß Anspruch 1, **dadurch gekennzeichnet, dass** das Masseverhältnis der eingesetzten Polyasparaginsäureester-Mischungen i) : ii) 20:80 bis 95:5 entspricht.

3. Verfahren gemäß Anspruch 1, **dadurch gekennzeichnet, dass** das Masseverhältnis der eingesetzten Polyasparaginsäureester-Mischungen der Abdichtung- und Haftschicht i) : ii) 65:35 bis 95:5 entspricht, bevorzugt 80:20 bis 95:05.

4. Verfahren gemäß Anspruch 1, **dadurch gekennzeichnet, dass** das Masseverhältnis der eingesetzten Polyasparaginsäureester-Mischungen der Grundierungsschicht i) : ii) 20:80 bis 50:50 entspricht, bevorzugt 20:80 bis 30:70.

5. Verfahren gemäß Anspruch 1 und 2, **dadurch gekennzeichnet, dass** die eingesetzten Polyasparaginsäureester-Mischungen, weniger als 0,2 Gew%, bevorzugt weniger als 0,1 Gew% Malein- oder Fumarsäurediethylester enthalten.

6. Verfahren gemäß einem oder mehreren der Ansprüche 1 bis 3, **dadurch gekennzeichnet, dass** Polyisocyanate und/oder Polyisocyanatprepolymere auf Basis von Hexamethylendiisocyanat mit Allophanatstrukturen und/oder Isocyanuratstrukturen und/oder Iminooxadiazindion-strukturen eingesetzt werden.

7. Verfahren gemäß einem oder mehreren der Ansprüche 1 bis 4, **dadurch gekennzeichnet, dass** die Abdichtungsschicht in Verbindung mit einem textilen Flächengebilde verarbeitet wird.

8. Verfahren gemäß einem oder mehreren der Ansprüche 1 bis 5, **dadurch gekennzeichnet, dass** die Abdichtungsschicht mindestens ein festes Flammschutzmittel enthält

9. Verfahren gemäß einem oder mehreren der Ansprüche 1 bis 6, **dadurch gekennzeichnet, dass** die Abdichtungsschicht mindestens ein Alterungsschutzmittel enthält.

10. Verfahren gemäß einem oder mehreren der Ansprüche 1 bis 6, **dadurch gekennzeichnet, dass** die Abdichtungsschicht mindestens Radikalfänger enthält.

11. Verfahren gemäß einem oder mehreren der Ansprüche 1 bis 8 zur Herstellung von Bauwerkdetails und Anschlüssen an aufgehende Bauteile in Kombination mit einer Polymerbitumen-Schweißbahn.

12. Vollflächigen Abdichtung hergestellt nach einem der vorangehenden Ansprüche.
